# EUROPEAN PATENT SPECIFICATION

(11) **EP 2 471 420 B1**
(45) Date of publication and mention of the grant of the patent: **28.02.2018**
(21) Application number: 10854615.1
(22) Date of filing: 09.10.2010
(51) Int. Cl.: A47J 31/40, A47J 31/44, A47J 31/36

(54) **Capsule brewing unit and capsule coffee machine equipped therewith**
Kapselbrüheinheit und Kapselkaffeemaschine mit Kapselbrüheinheit
Unité d'infusion de capsule et machine à café à capsule équipée de cette unité d'infusion de capsule

(30) Priority: 15.07.2010 CN 201010227466
(43) Date of publication of application: 04.07.2012
(73) Proprietor: Midea Group Co., Ltd., Foshan, Guangdong 528311 (CN)
(72) Inventor: XIAO, Liming, Guangdong 528311 (CN); LIU, Zhonghua, Guangdong 528311 (CN); JIN, Huan, Guangdong 528311 (CN); TANG, Jiang, Guangdong 528311 (CN)
(74) Representative: Petraz, Gilberto Luigi
(86) International application number: PCT/CN2010/077611
(87) International publication number: WO 2012/006823

(56) References cited:
- EP-A1- 1 046 366
- EP-A1- 2 044 867
- WO-A1-2004/049878
- WO-A1-2007/016977
- WO-A2-2007/110842
- CN-A- 1 371 650
- CN-A- 1 618 383
- CN-A- 1 638 679
- CN-A- 1 819 789
- US-A- 6 079 315

## Description

### FIELD OF THE INVENTION

The present invention relates to a beverage brewing unit, more particularly to a capsule brewing unit and a capsule coffee machine equipped therewith.

### BACKGROUND OF THE INVENTION

A coffee capsule is a small packet filled with ground coffee and it looks similar to jelly. Coffee capsules are generally used for dedicated capsule coffee machines for a cup of quick espresso. The capsule brewing unit, also known as the locking mechanism, is one of essential units in a capsule coffee machine. A good capsule brewing unit, except the excellent sealing and high pressure-withstanding performance, should also have automatic dumping function. In other words, it is able to automatically remove the used capsules from the brewing room. There are a variety of solutions in the prior art to achieve the automatic dumping function.

A typical example is a capsule extraction device disclosed by the Chinese Patent CN100475108C (granted date: April 08, 2009). The device is described in one of the examples comprising the steps of firstly inserting a capsule collar in insertion and positioning parts **(6, 7)** and positioning in an inclined manner via a stopping means **(20),** then closing the brewing room when the housing **(4)** moves towards the bottom of the capsules and meanwhile the housing **(4)** forces the capsule collar to pass through (or remove from) the stopping means **(20)** so as to allow the capsules to enter in the housing **(4),** and finally opening the brewing room after brewing, the coffee capsules will automatically drop to the bottom collector as they have come off the stopping means **(20).**

Another example is shown in the Chinese patent CN101500458A (publication date: August 05, 2009), which disclosed an infusion device to prepare beverages from disposable capsules comprising the steps of firstly inserting a raised edge **F** (i.e. capsule collar) of a capsule into the channel **17** of two movable elements **15,** then using the stopping means **17A** disposed at the end of the channel **17** for positioning, and finally the collars of capsules will enter into the channel **19** disposed at the lower openings of the moveable element 15 and automatically drop along the channel

Another capsule brewing unit similar to the one of the invention, is disclosed in WO2004/049878A1. To conclude, conventional capsule coffee machines basically have the same operating principle, comprising the steps of firstly inserting the capsule collars vertically into a clamping element, and then the main brewing chamber will move towards the bottom of the capsules (or reversible) so as to allow the capsules to come off the clamping element and then enter into the main brewing chamber. In simple terms, such method can be described as "vertical insertion and horizontal extraction", which has many advantages, but the disadvantages are also obvious.

### (1) Jamming problem

For a conventional capsule coffee machine, the main brewing chamber is placed horizontally and has a small distance with the brewing plate; therefore, users cannot directly insert the capsules in the main brewing chamber due to the blockage of the brewing plate. Consequently, users have to firstly vertically insert the capsule collar into a clamping element to allow the axis of each capsule to maintain in a horizontal position, and then mechanically enable the main brewing chamber to actively "load" the fixed capsules in the brewing room. However, in the loading process, the jamming problem often occurs because the capsules frequently fail to accurately enter into the main brewing chamber. For example, if capsules are not inserted into the exact position of the clamping element or unsuitable capsules are used, because the main brewing chamber has fixed size and movement track, it cannot automatically adjust the position of those misplaced capsules, leading to the jamming problem. Furthermore, it is also possible for the capsules not to properly enter into the main brewing chamber if the mechanical drive mechanism for the capsule movement is not designed reasonably and thus the main brewing chamber could not operate stably and gently. Generally, the fundamental cause for the jamming problem is that users cannot directly put the capsules in the main brewing chamber. Moreover, capsule coffee machines featuring high pressure have high safety requirements. When fault occurs, they have to be maintained by professionals, thus the maintenance costs are high. As a result, it is extremely important to ensure the reliable operation of the capsule coffee machines.

### (2) Inconvenient placement

When users intend to put the capsules in the capsule coffee machine, they have to aim the capsule collars with the corresponding collar groove of the clamping element.

In view of the above-described problems, it is one objective of the invention to provide a capsule brewing unit, which allows users to directly put the capsules in the main brewing chamber.

### SUMMARY OF THE INVENTION

To achieve the above objective, the first technical problem to be solved in the invention is to provide a capsule brewing unit, which is characterized in that it allows users to directly put the capsules in the main brewing chamber so as to solve the jamming problem occurred to the conventional capsule brewing units.

To achieve the above objective, the second technical problem to be solved in the invention is to provide a capsule coffee machine, which is characterized in that it allows users to directly put the capsules in the coffer machine so as to solve the jamming problem occurred to the conventional coffee machines. The invention solves the first technical problem as defined in the claims. As a further improvement, when the first brewing member is at the initial position, the opening direction of the main brewing chamber is the vertically upward direction; while when the first brewing member is at the position for brewing, the included angle formed between the opening direction of the main brewing chamber and the vertically upward direction ranges from 45° to 90°.

As a further improvement, the capsule brewing unit further comprises a discharge mechanism that is disposed on the bracket and is used for preventing the capsules from moving with the first brewing member when the first brewing member is in the process of returning.

As a further improvement, the discharge mechanism comprises a discharge arm and a reposition mechanism that used for returning the discharge arm to its original position; the discharge arm comprises a projected block and a blocking element that blocks the capsule collar; on the first brewing member is disposed with a check pawl that cooperates with the projected block and is used for driving the discharge arm to move to prevent the capsules from returning.

As an further improvement, the brewing plate comprises a fixed seat and a filter plate, wherein the filter plate is sealed in the fixed seat.

As a further improvement, the capsule brewing unit further comprises a puncture mechanism that is used to inject hot water into the main brewing chamber and to puncture the capsules. The operating mechanism is an inside-engaged gear drive mechanism including an internal gear that is connected with the rotating arm, an external gear with tooth shape that is engaged with the internal gear, and a power mechanism that is connected with the external gear to drive the external gear to rotate. Moreover, the power mechanism is either a handle or a motor.

As a further improvement, the capsule brewing unit further comprises a pipe valve or a circuit switch, in which on the pipe valve and the circuit switch are respectively disposed with an operating rod to control the operation of the pipe valve and the circuit switch, and on the external gear is disposed with a drive element that cooperates with the operating rod.

To solve the second technical problem of the invention, the second aspect of the present Invention is defined in claim 8. Compared with prior art, the first solution has the following advantages: the opening direction of the main brewing chamber deviates from the axial direction of the brewing plate, therefore the opening of the main brewing chamber will not be blocked by the brewing plate and users are able to put directly the capsules into the main brewing chamber, avoiding the brewing plate. Consequently, the capsule brewing unit provided by the invention allows users to put directly the capsules into the main brewing chamber without "loading" or secondary positioning, so that the jamming problem occurred to the conventional capsule brewing units has been solved.

Compared with prior art, the second solution has the following advantages: since the capsule brewing unit described in the first solution has been adopted, the capsule coffee machine described in the second solution solves the jamming problem occurred to the conventional capsule coffee machines.

### BRIEF DESCRIPTION OF THE DRAWINGS

FIG. **1** is a three-dimensional exploded view of a capsule brewing unit of the present invention;
FIG. **2** is a partial three-dimensional diagram of the capsule brewing unit of the present invention;
FIG. **3** is a partial view of the capsule brewing unit of the present invention;
FIG. **4** is a three-dimensional view of a discharge mechanism of the capsule brewing unit of the present invention;
FIG. **5** is a schematic diagram of the capsule brewing unit of the present invention with a first brewing member at the initial position;
FIG. **6** is a schematic diagram of the capsule brewing unit of the present invention with the first brewing member moving along the slide groove;
FIG. **7** is a schematic diagram of the capsule brewing unit of the present invention with the first brewing member moving along the straight groove;
FIG. **8** is a schematic diagram of the capsule brewing unit of the present invention with the first brewing member at the position for brewing;
FIG. **9** is a schematic diagram of the capsule brewing unit of the present invention with a check pawl touching a projected block of the discharge arm;
FIG. **10** is a schematic diagram of the capsule brewing unit of the present invention with the check pawl squeezing the projected block to enable the discharge arm to open;
FIG. **11** is a schematic diagram of the capsule brewing unit of the present invention with the check pawl passed through the projected block;
FIG. **12** is a schematic diagram of the capsule brewing unit of the present invention with the check pawl touching the projected block of the discharge arm when the first brewing member is in the process of returning;
FIG. **13** is a schematic diagram of the capsule brewing unit of the present invention with an external gear at the initial position; and
FIG. **14** is a schematic diagram of the capsule brewing unit of the present invention with the external gear at the end position.

### DETAILED DESCRIPTION OF THE EMBODIMENTS

The first aspect of the invention is explained in further detail as below with reference to the drawings.

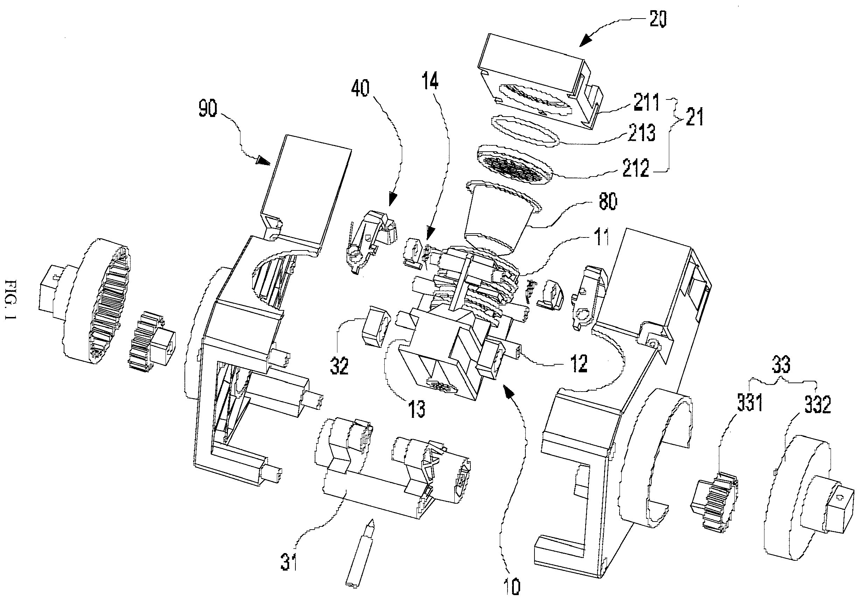

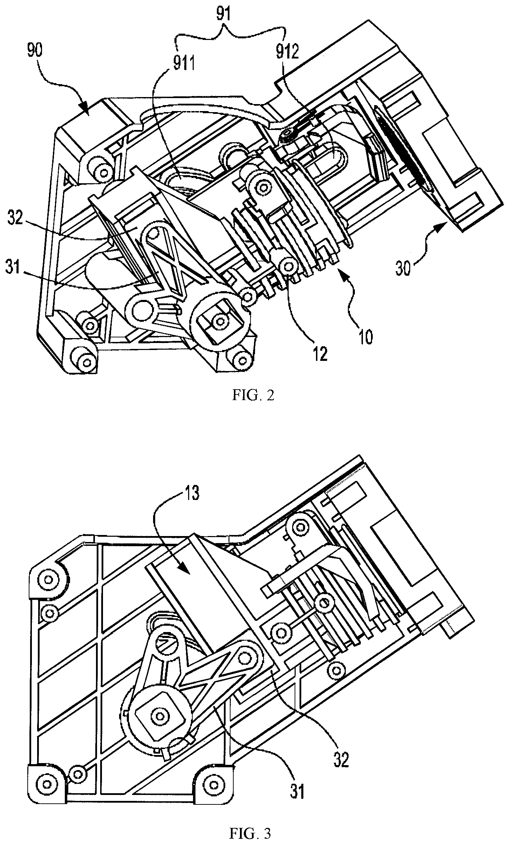

As shown in FIGS **1** and **2****,** a capsule brewing unit provided by the invention, comprises a bracket **90,** a first brewing member **10** and a second brewing member **20** that are separately disposed on the bracket **90,** and a driving mechanism **30** that drives the first brewing member **10** to move relatively to the second brewing member **20.** On the first brewing member **10** is disposed with a main brewing chamber **11** to accommodate capsules **80.** On the second brewing member **20** is disposed with a brewing plate **21** that cooperates with the main brewing chamber **11** to form a brewing room. Furthermore, the coffee capsules **80** or other beverage capsules (e.g. tea capsules) can be used for the capsule brewing unit of the invention.

When the first brewing member **10** is at the initial position, which is the position where a user puts a capsule into the main brewing chamber 11 the opening direction of the main brewing chamber **11** deviates from the axial direction of the brewing plate **21,** therefore the opening of the main brewing chamber **11** will not be blocked by the brewing plate and users are able to put directly the capsules into the main brewing chamber, avoiding the brewing plate.

However, while the main brewing chamber is moving from the initial position to the position for brewing, its opening direction will vary. At some position where the opening direction of the main brewing chamber is greater than 90°, the capsules are likely to drop out. Therefore, it is necessary to ensure that the included angle formed between the opening direction of the main brewing chamber and the vertically upward direction is smaller than or equal to 90°, while the capsule brewing unit is moving with the first brewing member, thus to ensure that the capsules can be held in the main brewing chamber under the support force and the friction force of the main brewing chamber, without resorting to an additional fixing element. Naturally, fixing elements may also be disposed on the main brewing chamber to fix the capsules inside so as to prevent the capsules from coming out, which may lead to a malfunction during the movement of the main brewing chamber.

In addition, for the purpose of convenient placement of the capsules, when the main brewing chamber is at the initial position, the opening thereof faces upwards, including the circumstances that the opening faces upwards vertically or obliquely. The reason why the opening faces upwards is to allow users to directly put the capsules 80 into the main brewing chamber **11** from the top of the capsule brewing unit. It would be fine as long as the opening direction can achieve such purpose. It is understandable and achievable to those skilled in the art. However, in order for users to easily put the capsules **80** in the main brewing chamber, in this embodiment, when the main brewing chamber **11** is at the initial position, the opening direction thereof faces upwards vertically.

In addition, when the first brewing member **10** is at the position for brewing, the included angle formed between the opening direction of the main brewing chamber **11** and the vertically upward direction ranges from 30° to 90°, more preferably 45°. As a result, there is a sufficient space between the opening of the main brewing chamber **11** and the brewing plate **21** for users to put the capsules. When the first brewing member **10** is at the position for brewing, the opening direction of the main brewing chamber **11** is parallel with the axial direction of the brewing plate **21;** therefore the main brewing chamber **11** can closely cooperate with the brewing plate to form a fully sealed brewing room.

As shown in FIGS. **1****,** **2** and **3****,** on the bracket **90** is disposed with a guide groove **91** guiding the first brewing member **10** to move. The guide groove **91** comprises an arc-shaped groove **911** and a straight groove **912,** the extension direction of the straight groove **912** is parallel with the axial direction of the brewing plate, and on the first brewing member **10** is disposed with a guide member **12** that cooperates with the guide groove **91.**

The driving mechanism **30** comprises a rotating arm **31** hinged on the bracket **90,** a slide block **32** hinged on the rotating arm **31,** and an operating mechanism **33** that drives the rotating arm **31** to rotate. On the first brewing member **10** is disposed with a slide groove **13** (shown in FIG. **3****)** matching the slide block **32.** The operating mechanism **33** is an inside-engaged gear drive mechanism including an internal gear **331** that is connected with the rotating arm **31,** an external gear **332** with tooth shape that is engaged with the internal gear **331,** and a power mechanism that is connected with the external gear **332** is to drive the external gear to rotate. Moreover, the power mechanism is either a handle (not shown) or a motor (not shown).

Furthermore, the brewing plate **21** comprises a fixed seat **211** and a filter plate **212,** wherein the filter plate **212** is sealed in the fixed seat **211** via a seal ring **213.**

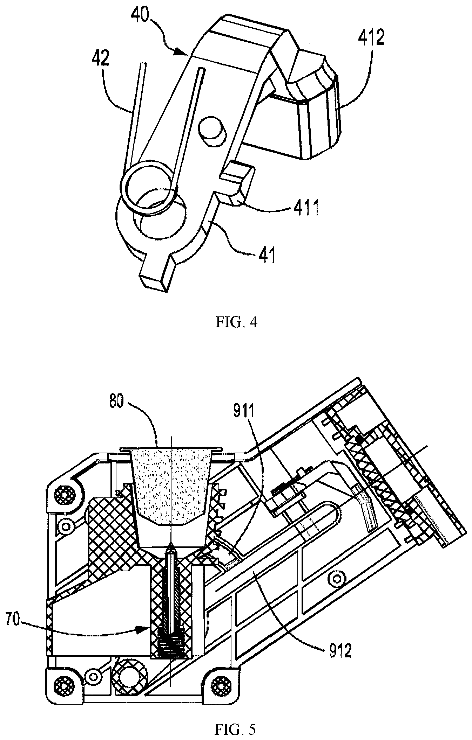

As shown in FIGS. **1** and **4****,** the capsule brewing unit provided by the invention further comprises a discharge mechanism **40** that is disposed on the bracket **90** and is used for preventing the capsules **80** from moving with the first brewing member 10 when the first brewing member **10** is in the process of returning. The discharge mechanism **40** includes a discharge arm **41** and a reposition mechanism **42** that used for returning the discharge arm **41** to its original position. The discharge arm **41** includes a projected block **411** and a blocking element **412** that blocks the collar of the capsule **80.** On the first brewing member **10** is disposed with a check pawl **14** that cooperates with the projected block **411** and is used for driving the discharge arm **41** to move to prevent the capsules **80** from returning. The reposition mechanism **42** may be a return spring or other mechanisms that can make the discharge arm **41** to automatically return to the initial position.

As shown in FIGS. **5-8****,** the capsule brewing unit further comprises a puncture mechanism **70** that is used to inject hot water into the main brewing chamber **11** and to puncture the capsules.

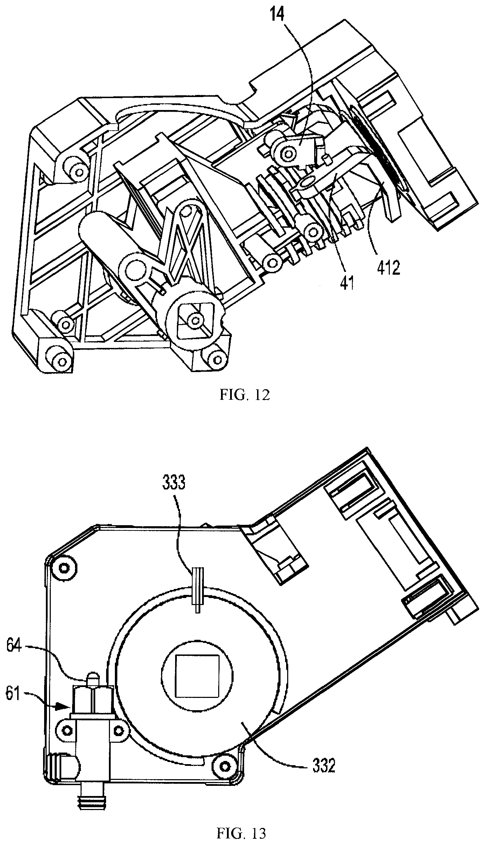

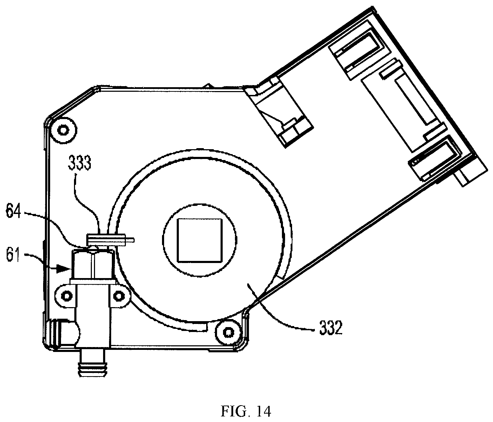

As shown in FIGS. **13** and **14****,** the capsule brewing unit further comprises a pipe valve **61,** in which on the pipe valve **61** is disposed with an operating rod **64** to control the operation of pipe valve, and on the external gear **332** is disposed with a drive element **333** that cooperates with the operating rod **64.** As shown in FIG. **13****,** the external gear **332** is at the initial position and it is also the initial position for the first brewing member **10,** where the drive element **333** is away from the operating rod **64.** As shown in FIG. **14****,** the external gear **332** is at the end position and it is also the brewing position for the first brewing member **10,** where the drive element **333** contacts with the operating rod **64,** thus the status of the pipe valve **61** is changed. Moreover, the pipe valve **61** could be replaced with a circuit switch.

The operating principle of the capsule brewing unit is explained in further detail as below with reference to the drawings.

As shown in FIG. **5****,** the first brewing member **10** is at the initial position (i.e. the position where users put the capsules), where the opening of the main brewing chamber **11** faces upwards and the axial direction of the main brewing chamber is parallel with the vertically upward direction, i.e. perpendicular to horizontal plane, thus users can vertically put the capsules **80** into the main brewing chamber **11.**

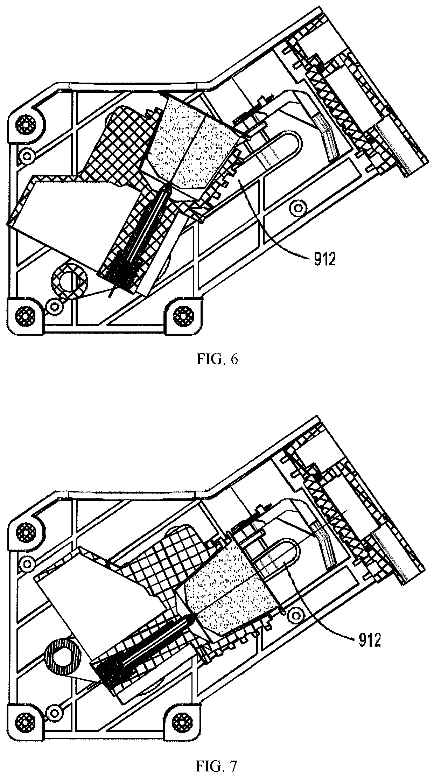

As shown in FIG. **6****,** the first brewing member **10** moves along the arc-shaped portion of the guide groove **91** that is disposed on the fixing element, thus the capsules **80** are properly held in the main brewing chamber **11.**

As shown in FIG. **7****,** the first brewing member **10** moves along the guide groove **91** that is disposed on the fixing element and starts to enter the straight groove **912,** thus the capsules **80** are still held in the main brewing chamber **11.**

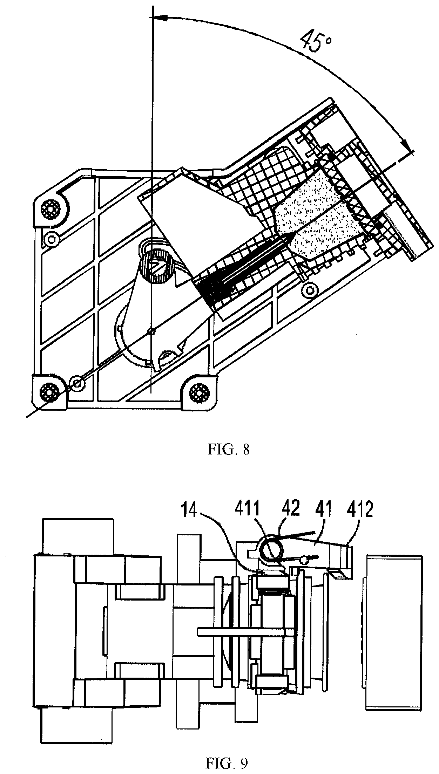

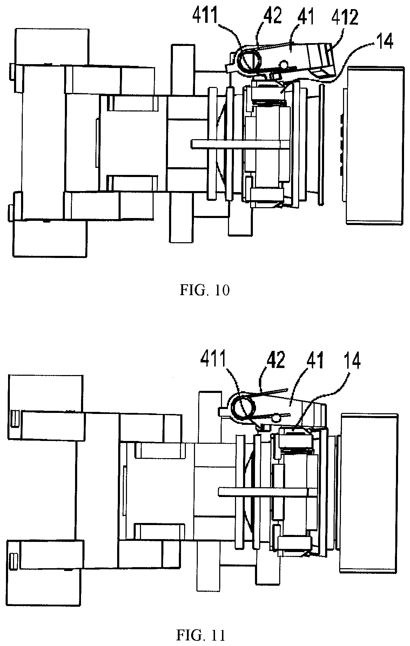

As shown in FIG. **8****,** the first brewing member **10** moves to the end (i.e. the position for brewing) of the straight groove **912** of the guide groove **91.** As shown in FIGS. **9** and **10****,** during the above process, when the first brewing member **10** moves to a certain position along the straight groove **912,** the check pawl **14** will remain unrotated and squeeze the projected block **411** of the discharge arm **41,** since the projected block **411** of the discharge arm **41** is at the position that is reverse of the check pawl **14,** thus the check pawl **14** opens a certain angle to enable the blocking element **412** of the discharge arm **41** not to hinder the capsules **80** and the first brewing member **10** from moving continuously. As shown in FIG. **11****,** when the collars of the capsules **80** pass through the blocking element **412** of the discharge arm **41** with a certain distance, the check pawl **14** will depart from the projected block **411** of the discharge arm **41** and the discharge arm **41** will automatically return to its original position under the effects of the return spring, and eventually the first brewing member **10** moves to the position for brewing.

When the brewing of capsules **80** is finished, the first brewing member **10** firstly returns along the straight groove **912** of the guide groove **91,** and the check pawl **14** on the first brewing member **10** will touch the projected block **411** of the discharge arm **41** again, as shown in FIG. **12****.**Presently the projected block **411** of the discharge arm **41** is at a straightforward direction of the check pawl **14,** and the check pawl **14** will start to rotate under the blocking of the projected block **411** on the discharge arm **41,** thus fail to force the discharge arm **41** to open a certain angle. Then the capsules **80** will gradually depart from the main brewing chamber **11** as the collars of the capsules **80** are blocked by the blocking element **412** of the discharge arm 41. After the capsules **80** completely depart from the main brewing chamber **11,** the capsules **80** will slide down along the surface of the blocking element **412** of the discharge arm **41** under the effects of the self weight, thus the automatic discharge operation of the capsule brewing unit is achieved. Finally the first brewing member **10** will return along the guide groove **91** to the initial position, and is ready for the next brewing.

In addition, in order to achieve the purpose that the first brewing member **10** moves along the guide groove **91,** users are required to start the operating mechanism **33** to rotate the rotating arm **31,** which further drive the first brewing member **10** to move along the guide groove **91.** There are two stages for the movement of the first brewing member:
**(1)** Moving from the initial position of the arc-shaped groove **911** to the initial position of the straight groove **912.** As shown in FIG. **2****,** in the above process, the rotating arm **31** drives the slide block **32** to move in a circular motion, if the arc-shaped groove **911** is a circular arc, the slide block **32** remains still relative to the slide groove **13** of the first brewing member **10,** and meanwhile drives the first brewing member **10** to move along the arc-shaped groove **911** of the guide groove **91.**
(2) Moving from the initial position to the end position (i.e. the position for brewing) of the straight groove **912.** As shown in FIG. 3, in the above process, the slide block **32** continues to move in a circular motion, such movement can be divided into the movement along the slide groove **13** and the movement along the straight groove **912.** In other words, at the time when the slide block **32** pushes the first brewing member **10** to move along the straight groove **912,** the slide block **32** also slides in the slide groove **13.** When the slide block **32** moves to the end of the slide groove **13,** the first brewing member **10** just moves to the brewing position.

Furthermore, a capsule coffee machine as the second aspect of the present invention, comprises a frame as well as a capsule brewing unit, a hot water system and a control system that are separately disposed on the frame. As the capsule brewing unit is the one described in the first aspect, the capsule coffee machine is not further described herein.

## Claims

1. A capsule brewing unit, comprising:
a bracket **(90);**
a first brewing member **(10)** and a second brewing member **(20)** that are separately disposed on the bracket **(90);** and
a driving mechanism **(30)** that drives the first brewing member **(10)** to move relatively to the second brewing member **(20);**
on the first brewing member **(10)** is disposed with a main brewing chamber **(11)** that are used to accommodate capsules, and
on the second brewing member **(20)** is disposed with a brewing plate **(21)** that cooperates with the main brewing chamber **(11)** to form a brewing room,
wherein when the first brewing member **(10)** is at the initial position, namely the position where a user puts a capsule into the main brewing chamber **(11),** the opening direction of the main brewing chamber **(11)** deviates from the axial direction of the brewing plate **(21),**
wherein during the movement of the first brewing member **(10),** the included angle formed between the opening direction of the main brewing chamber **(11)** and the vertically upward direction is smaller than or equal to 90°,
wherein when the first brewing member **(10)** is at the initial position, the opening of the main brewing chamber **(11)** faces upwards,
and wherein on the bracket **(90)** is disposed with a guide groove **(91)** guiding the first brewing member **(10)** to move and the guide groove **(91)** includes an arc-shaped groove **(911)** and a straight groove **(912),** the extension direction of the straight groove **(912)** is parallel with the axial direction of the brewing plate, and on the first brewing member **(10)** is disposed with a guide member **(12)** that cooperates with the guide groove **(91),**
**characterized in that** said driving mechanism **(30)** comprises a rotating arm **(31)** hinged on the bracket **(90),** a slide block **(32)** hinged on the rotating arm **(31),** and an operating mechanism **(33)** that drives the rotating arm **(31)** to rotate; on the first brewing member **(10)** is disposed with a slide groove **(13)** matching the slide block **(32).**

2. The capsule brewing unit according to claim **1, characterized in that** when the first brewing member **(10)** is at the initial position, the opening direction of the main brewing chamber **(11)** is of the vertically upward direction; while when the first brewing member **(10)** is at the position for brewing, the included angle formed between the opening direction of the main brewing chamber **(11)** and the vertically upward direction ranges from 45° to 90°.

3. The capsule brewing unit according to any of claims **1-2, characterized in that** the capsule brewing unit further comprises a discharge mechanism **(40)** that is disposed on the bracket **(90)** and is used for preventing the capsules from moving with the first brewing member **(10)** when the first brewing member **(10)** is in the process of returning.

4. The capsule brewing unit according to claim **3, characterized in that** the discharge mechanism **(40)** comprises a discharge arm **(41)** and a reposition mechanism **(42)** that used for returning the discharge arm **(41)** to its original position; the discharge arm **(41)** comprises a projected block **(411)** and a blocking element **(412)** that used for blocking the capsule collar; on the first brewing member **(10)** is disposed with a check pawl **(14)** that cooperates with the projected block **(411)** and is used for driving the discharge arm **(41)** to move so as to prevent the capsules from returning.

5. The capsule brewing unit according to any of claims **1-2, characterized in that** the brewing plate **(21)** comprises one or more fixed seats **(211)** and one or more filter plates **(212), characterized in that** the filter plate **(212)** is sealed in the fixed seat **(211).**

6. The capsule brewing unit according to any of claims **1-2, characterized in that** the capsule brewing unit further comprises a puncture mechanism **(70)** that is used to inject hot water into the main brewing chamber **(11)** and to puncture the capsules; the operating mechanism **(33)** is an inside-engaged gear drive mechanism including an internal gear **(331)** that is connected with the rotating arm **(31),** an external gear **(332)** with tooth shape that is engaged with the internal gear **(331),** and a power mechanism that is connected with the external gear **(332)** to drive the external gear to rotate; the power mechanism is either a handle or a motor.

7. The capsule brewing unit according to claim **6, characterized in that** the capsule brewing unit further comprises a pipe valve **(61)** or a circuit switch, in which on the pipe valve **(61)** and the circuit switch are respectively disposed with an operating rod **(64)** to control the operation of the pipe valve and the circuit switch, and on the external gear **(332)** is disposed with a drive element **(333)** that cooperates with the operating rod **(64).**

8. A capsule coffee machine comprises a frame as well as a capsule brewing unit, a hot water system and a control system that are disposed on the frame, **characterized in that** the capsule brewing unit is the one described in any of claims 1-7.

## Patentansprüche

1. Kapselbrüheinheit, umfassend:
einen Halter (90)
ein erstes Brühelement (10) und ein zweites Brühelement (20), die am Halter (90) separat angeordnet sind; und einen Antriebsmechanismus (30), der das erste Brühelement (10) dazu treibt, sich relativ zum zweiten Brühelement (20) zu bewegen;
am ersten Brühelement (10) ist eine Hauptbrühkammer (11) vorgesehen, die zur Aufnahme von Kapseln verwendet wird, und
am zweiten Brühelement (20) ist eine Brühplatte (21) vorgesehen, die mit der Hauptbrühkammer (11) zusammenarbeitet, um einen Brühraum zu bilden,
worin, wenn das erste Brühelement (10) sich in der Anfangsstellung befindet, und zwar in der Stellung, wo ein Benutzer eine Kapsel in die Hauptbrühkammer (11) hinein steckt, die Öffnungsrichtung der Hauptbrühkammer (11) von der Axialrichtung der Brühplatte (21) abweicht,
worin während der Bewegung des ersten Brühelementes (10) der eingeschlossene Winkel, der zwischen der Öffnungsrichtung der Hauptbrühkammer (11) und der vertikalen Aufwärtsrichtung gebildet ist, kleiner als oder gleich 90° ist,
worin, wenn das erste Brühelement (10) sich in der Anfangsstellung befindet, die Öffnung der Hauptbrühkammer (11) nach oben gerichtet ist,
und worin am Halter (90) eine Führungsnut (91) angeordnet ist, die das erste Brühelement (10) zur Bewegung führt, und die Führungsnut (91) eine bogenförmige Nut (911) und eine gerade Nut (912) umfasst, die Erstreckungsrichtung der geraden Nut (912) zur Axialrichtung der Brühplatte parallel ist, und am ersten Brühelement (10) ein Führungselement (12) angeordnet ist, das mit der Führungsnut (91) zusammenarbeitet,
**dadurch gekennzeichnet, dass** der Antriebsmechanismus (30) einen Dreharm (31), der am Halter (90) angelenkt ist, einen Gleitblock (32), der am Dreharm (31) angelenkt ist, und einen Betätigungsmechanismus (33), der den Dreharm (31) zum Drehen antreibt, umfasst; am ersten Brühelement (10) eine Gleitnut (13) angeordnet ist, die zum Gleitblock (32) passt.

2. Kapselbrüheinheit nach Anspruch 1, **dadurch gekennzeichnet, dass**, wenn das erste Brühelement (10) sich in der Anfangsstellung befindet, die Öffnungsrichtung der Hauptbrühkammer (11) die vertikale Aufwärtsrichtung ist; während, wenn das erste Brühelement (10) sich in der Brühstellung befindet, der eingeschlossene Winkel, der zwischen der Öffnungsrichtung der Hauptbrühkammer (11) und der vertikalen Aufwärtsrichtung gebildet ist, zwischen 45° und 90° liegt.

3. Kapselbrüheinheit nach einem der Ansprüche 1-2, **dadurch gekennzeichnet, dass** die Kapselbrüheinheit ferner einen Abfuhrmechanismus (40) umfasst, der am Halter (90) angeordnet ist, und eingesetzt wird, um zu verhindern, dass die Kapseln sich mit dem ersten Brühelement (10) bewegen, wenn das erste Brühelement (10) sich im Rückkehrvorgang befindet.

4. Kapselbrüheinheit nach Anspruch 3, **dadurch gekennzeichnet, dass** der Abfuhrmechanismus (40) einen Abfuhrarm (41) und einen Repositioniermechanismus (42) umfasst, der eingesetzt wird, um den Abfuhrarm (41) zu seiner Originalstellung zurückzubringen; der Abfuhrarm (41) einen vorstehenden Block (411) und ein Sperrelement (412) umfasst, das verwendet wird, um den Kapselkragen zu sperren; am ersten Brühelement (10) eine Arretierklinke (14) angeordnet ist, die mit dem vorstehenden Block (411) zusammenarbeitet und die dazu eingesetzt wird, um den Abfuhrarm (41) zur Bewegung zu treiben, so dass es verhindert wird, dass die Kapseln zurückkehren.

5. Kapselbrüheinheit nach einem der Ansprüche 1-2, **dadurch gekennzeichnet, dass** die Brühplatte (21) einen oder mehrere feste Sitze (211) und eine oder mehrere Filterplatten (212) umfasst, **dadurch gekennzeichnet, dass** die Filterplatte (212) im festen Sitz (211) versiegelt ist.

6. Kapselbrüheinheit nach einem der Ansprüche 1-2, **dadurch gekennzeichnet, dass** die Kapselbrüheinheit ferner einen Durchstichmechanismus (70) umfasst, der eingesetzt wird, um Heißwasser in die Hauptbrühkammer (11) hinein zu injizieren und die Kapseln durchzustechen; der Betätigungsmechanismus (33) ein innen eingreifender Zahnradantriebsmechanismus ist, der ein Innenzahnrad (331), das mit dem Dreharm (31) verbunden ist, ein Außenzahnrad (332) mit der Form eines Zahns, das in das Innenzahnrad (331) greift, und einen Antriebsmechanismus, der mit dem Außenzahnrad (332) verbunden ist, um das Außenzahnrad zur Drehung zu treiben, umfasst; der Antriebsmechanismus entweder ein Handgriff oder ein Motor ist.

7. Kapselbrüheinheit nach Anspruch 6, **dadurch gekennzeichnet, dass** die Kapselbrüheinheit ferner ein Rohrventil (61) oder einen Schutzschalter umfasst, worin das Rohrventil (61) und der Schutzschalter jeweils mit einer Antriebsstange (64) versehen sind, um den Betrieb des Rohrventils und des Schutzschalters zu steuern, und das Außenzahnrad (332) mit einem Antriebselement (333) versehen ist, das mit der Antriebsstange (64) zusammenarbeitet.

8. Eine Kapselkaffeemaschine umfasst einen Rahmen sowie eine Kapselbrüheinheit, ein Heißwassersystem und ein Steuersystem, die am Rahmen angeordnet sind, **dadurch gekennzeichnet, dass** die Kapselbrüheinheit diejenige ist, die in einem der Ansprüche 1-7 beschrieben ist.

## Revendications

1. Unité d'infusion de capsule, comprenant :
un support (90) ;
un premier élément d'infusion (10) et un second élément d'infusion (20) placés séparément sur le support (90) ; et
un mécanisme d'entraînement (30) entraînant le premier élément d'infusion (10) pour le déplacer par rapport au second élément d'infusion (20) ;
une chambre d'infusion principale (11) étant placée sur le premier élément d'infusion (10) et destinée à contenir des capsules, et
une plaque d'infusion (21) étant placée sur le second élément d'infusion (20), et coopérant avec la chambre d'infusion principale (11) pour former un compartiment d'infusion, dans lequel le premier élément d'infusion (10) est dans la position initiale, notamment la position dans laquelle un utilisateur place une capsule dans la chambre d'infusion principale (11), la direction d'ouverture de la chambre d'infusion principale (11) déviant de la direction axiale de la plaque d'infusion (21),
dans laquelle, pendant le mouvement du premier élément d'infusion (10), l'angle formé entre la direction d'ouverture de la cavité d'infusion principale (11) et la direction verticale vers le haut est égale ou inférieur à 90°,
dans laquelle, lorsque le premier élément d'infusion (10) est au niveau de la position initiale, l'ouverture de la chambre d'infusion principale (11) est orientée vers le haut,
et dans laquelle une rainure de guidage (91) est placée sur le support (90), guidant le premier élément d'infusion (10) dans son mouvement et la rainure de guidage (91) comprend une rainure en arc (911) et une rainure droite (912), la direction d'étendue de la rainure droite (912) étant parallèle à la direction axiale de la plaque d'infusion, et un élément de guidage (12) étant placé sur le premier élément d'infusion (10) et coopérant avec la rainure de guidage (91),
**caractérisé en ce que** ledit mécanisme d'entraînement (30) comprend un bras rotatif (31) articulé sur le support (90), un bloc coulissant (32) articulé sur le bras rotatif (31), et un mécanisme de fonctionnement (33) qui entraîne la rotation du bras rotatif (31) ; une rainure de coulissement (13) correspondant au bloc coulissant (32) étant placée sur le premier élément d'infusion (10).

2. Unité d'infusion de capsule selon la revendication 1, **caractérisée en ce que**, lorsque le premier élément d'infusion (10) est dans la position initiale, la direction d'ouverture de la chambre d'infusion principale (11) est la direction verticale vers le haut ; et lorsque le premier élément d'infusion (10) est dans la position d'infusion, l'angle formé entre la direction d'ouverture de la chambre d'infusion principale (11) et la direction verticale vers le haut est de 45° à 90°.

3. Unité d'infusion de capsule selon n'importe des revendications 1 et 2, **caractérisée en ce que** l'unité d'infusion de capsule comprend également un mécanisme de décharge (40) qui est placé sur le support (90) et a la fonction d'empêcher le déplacement des capsules avec le premier élément d'infusion (10) lorsque le premier élément d'infusion (10) est dans la phase de retour.

4. Unité d'infusion de capsule selon la revendication 3, **caractérisé en ce que** le mécanisme de décharge (40) comprend un bras de décharge (41) et un mécanisme de repositionnement (42) qui a la fonction de ramener le bras de décharge (41) dans sa position d'origine; le bras de décharge (41) comprend un bloc en saillie (411) et un élément de blocage (412) ayant la fonction de bloquer le collier de capsule; un cliquet d'arrêt (14) est placé sur le premier élément d'infusion (10) et coopère avec le bloc en saillie (411) et a la fonction d'entraîner le bras de décharge (41) pour le déplacer de façon à empêcher le retour des capsules.

5. Unité d'infusion de capsule selon n'importe laquelle des revendications 1 et 2, **caractérisée en ce que** les plaque d'infusion (21) comprend un ou plusieurs sièges fixes (211) et une ou plusieurs plaques filtrantes (212), **caractérisée en ce que** la plaque filtrante (212) est logée de façon étanche dans le siège fixe (211).

6. Unité d'infusion de capsule selon n'importe laquelle des revendications 1 et 2, **caractérisée en ce que** l'unité d'infusion de capsule comprend également un mécanisme de perforation (70) qui est utilisé pour injecter de l'eau chaude dans la chambre d'infusion principale (11) et pour perforer les capsules; le mécanisme de fonctionnement (33) est un mécanisme d'entraînement par engrenages à engagement intérieur comprenant un engrenage intérieur (331) relié au bras rotatif (31), un engrenage extérieur (332) à dents, engagé avec l'engrenage intérieur (331), et un mécanisme d'alimentation connecté à l'engrenage extérieur (332) pour entraîner l'engrenage extérieur en rotation ; le mécanisme d'alimentation est une poignée ou un moteur.

7. Unité d'infusion de capsule selon la revendication 6, **caractérisée en ce que** l'unité d'infusion de capsule comprend également un clapet du tuyau (61) ou un commutateur de circuit, dans laquelle une tige de manoeuvre (64) est placée respectivement sur le clapet de tuyau (61) et le commutateur de circuit pour commander le fonctionnement du clapet de tuyau et du commutateur de circuit, et un élément d'entraînement (333) est placé sur l'engrenage extérieur (332) et coopère avec la tige de commande (64).

8. Machine à café à capsules comprenant un cadre et une unité d'infusion de capsule, un système à eau chaude et un système de commande, placés sur le cadre, **caractérisée en ce que** l'unité d'infusion de capsule est selon la description de n'importe laquelle des revendications 1 à 7.
